# EUROPEAN PATENT SPECIFICATION

(11) **EP 3 316 544 B1**
(45) Date of publication and mention of the grant of the patent: **25.10.2023**
(21) Application number: 16829619.2
(22) Date of filing: 26.04.2016
(51) Int. Cl.: H04L 9/32, H04L 67/1004

(54) **TOKEN GENERATION AND AUTHENTICATION METHOD, AND AUTHENTICATION SERVER**
TOKENERZEUGUNGS- UND -AUTHENTIFIZIERUNGSVERFAHREN UND AUTHENTIFIZIERUNGSSERVER
PROCÉDÉ DE GÉNÉRATION ET D'AUTHENTIFICATION DE JETON AINSI QUE SERVEUR D'AUTHENTIFICATION

(30) Priority: 24.07.2015 CN 201510439479
(43) Date of publication of application: 02.05.2018
(73) Proprietor: Huawei Technologies Co., Ltd., Longgang District Shenzhen, Guangdong 518129 (CN)
(72) Inventor: GUO, Guangming, Shenzhen Guangdong 518129 (CN)
(74) Representative: Körber, Martin Hans
(86) International application number: PCT/CN2016/080254
(87) International publication number: WO 2017/016252

(56) References cited:
- CN-A- 101 605 030
- CN-A- 102 893 623
- US-A1- 2006 173 781
- US-A1- 2007 118 890
- US-A1- 2011 320 616
- US-A1- 2014 282 940
- Kerberos Consortium: "Ticket management - MIT Kerberos Documentation", MIT Kerberos Documentation, 19 November 2012 (2012-11-19), pages 1-7, XP055650261, Retrieved from the Internet: URL:https://web.mit.edu/kerberos/krb5-deve l/doc/user/tkt_mgmt.html [retrieved on 2019-12-06]
- Bruce Schneier: "Kerberos" In: "Applied cryptography : protocols, algorithms and source code in C", 31 December 1996 (1996-12-31), JOHN WILEY & SONS, New York [u.a.] 021893, XP055650304, ISBN: 978-0-471-11709-4 pages 566-571,

## Description

### TECHNICAL FIELD

The present invention relates to the communications field, and in particular, to a token generation and authentication method and an authentication server.

### BACKGROUND

Single sign-on means that in multiple mutually trusted application systems, a user can access all application systems by logging in only once. Generally, one website may include multiple application systems. For example, a website may include application systems such as an online point of sales, an online shopping mall, a bonus points mall, and a portal. If the website supports single sign-on, the user can access all application systems on the website by logging in to the website only once.

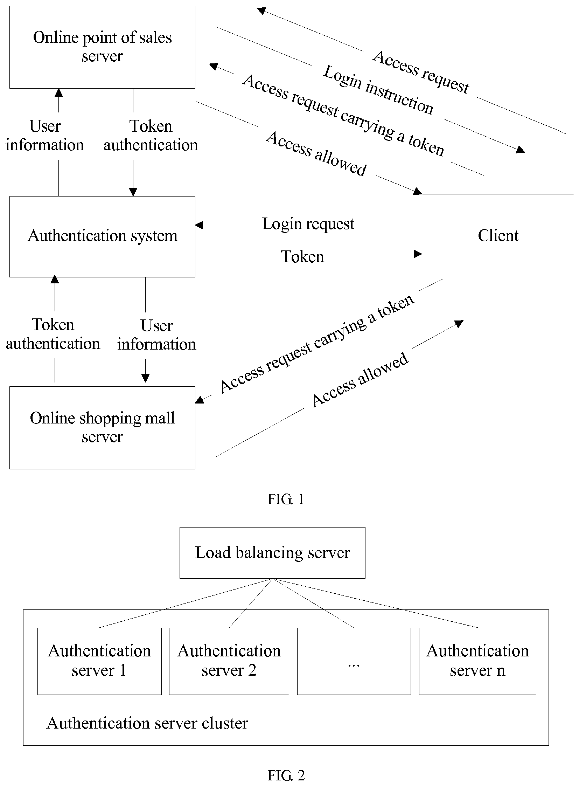

On a website supporting single sign-on, the website generally includes an application system server supporting various application systems and an authentication system for login and token authentication. The authentication system of the website generates a token for a user after the user successfully logs in, and then the user may access the application systems by carrying the token. FIG. 1 shows a single sign-on process of a user by using an example. For example, the application system is the online point of sales and the online shopping mall. Referring to FIG. 1, a network architecture includes an online point of sales server, an online shopping mall server, an authentication system, and a client of a user. A specific single sign-on process includes the following: When a user accesses an online point of sales, the client sends an access request to the online point of sales server, and the online point of sales server feeds back a login instruction to the client when determining that the user does not log in; the client sends a login request carrying a user name and a password to the authentication system, and the authentication system generates a token for the user after determining, according to the user name and the password, that the user successfully logs in, and then sends the token to the client; afterwards, when the user accesses the online point of sales, the client sends an access request carrying the token to the online point of sales server, the online point of sales server sends the token to the authentication system for authentication, and if the authentication succeeds, the authentication system feeds back user information to the online point of sales server, and the online point of sales server allows the user to access the online point of sales; similarly, when the user accesses an online shopping mall, the client sends an access request carrying the token to the online shopping mall server, the online shopping mall server sends the token to the authentication system for authentication, and if an authentication result is successful authentication, the authentication system feeds back the user information to the online shopping mall server, and the online shopping mall server allows the user to access the online shopping mall.

Referring to FIG. 2, an authentication system generally includes a load balancing server and an authentication server cluster. The authentication server cluster includes n authentication servers, where n is greater than or equal to 2. The load balancing server is separately connected to a client and an application system server. When the client sends a login request to the authentication system or the application system server sends a token authentication request to the authentication system, the load balancing server distributes the request to an authentication server in the authentication server cluster for processing. The load balancing server generally performs a hash operation according to an IP address of the client or the application system server that sends the request, and distributes the received request according to an operation result. Because the client and the application system server have different IP addresses, the load balancing server may distribute a login request of a user sent by the client and a token authentication request of the user sent by the application system server to different authentication servers. That is, an authentication server that generates a token is different from an authentication server that authenticates the token, and as a result, the authentication system cannot correctly perform token authentication, and the user cannot properly access the application system by using the token.

Currently, a solution to this problem is that each authentication server in the authentication server cluster replicates sessions in all other authentication servers. A session herein is user status information stored after the user successfully logs in by an authentication server that processes the login request of the user, such as a user login status, a token list distributed for the user, or another status. The session is established after the user successfully logs in, and is cleared when the user performs no access before timeout. For example, as listed in Table 1, an authentication server 1 stores sessions of users A, E, and G, an authentication server 2 stores sessions of users C and D, and an authentication server 3 stores sessions of users F and H. Therefore, the authentication server 1 needs to replicate the sessions in the authentication servers 2 and 3, the authentication server 2 needs to replicate the sessions in the authentication servers 1 and 3, and the authentication server 3 needs to replicate the sessions in the authentication servers 1 and 2. As listed in Table 2, the authentication servers 1, 2, and 3 eventually need to store the sessions of the users A to H.

**Table 1**

| **Authentication server 1** | **Authentication server 2** | **Authentication server 3** |
|---|---|---|
| User A | User C | User F |
| User E | User D | User H |
| User G | | |

**Table 2**

| **Authentication server 1** | **Authentication server 2** | **Authentication server 3** |
|---|---|---|
| User A | User C | User F |
| User E | User D | User H |
| User G | User A | User A |
| User C | User E | User E |
| User D | User G | User G |
| User F | User F | User C |
| User H | User H | User D |

Each authentication server needs to replicate the sessions in all the other authentication servers, and this greatly consumes data transmission resources in the authentication server cluster. In addition, each authentication server stores the sessions of all the users, and this imposes a high requirement on an authentication server capacity and wastes storage resources of the authentication server cluster.

US 2006/173781 A1 discloses a ticket issuance service, which issues a session ticket to an authenticated user. The session ticket comprises a variable named "User_IP" which means the client IP address to which the session ticket was issued and is used in session ticket validation to detect source spoofing, i.e. the HTTP server must validate the session ticket in HTTP request headers by confirming the client IP address (from which the session ticket or the HTTP request was transmitted) matches the value of "User IP" variable in the session ticket. Thus, the use of "User_IP" variable in a session ticket can prevent a user from using a session ticket that was not originally issued to him. If the session ticket is not found in the HTTP request headers, the user is then redirected to an authentication HTML form where the user can enter a user-ID and password, so that the user can be authenticated and then be delivered with a session ticket in HTTP response headers as cookies.

Kerberos Consortium: "Ticket management - MIT Kerberos Documentation", MIT Kerberos Documentation, 19 November 2012 (2012-11-19), pages 1-7, XP055650261, discloses that a forwardable ticket includes network address of a remote system to allow authentication on that host to work as though the user were logged in locally.

US 2014/282940 A1 discloses that a first domain server sends a redirection URL and a token to a user device, wherein the redirection URL is address of a second domain server, to have the user device authenticated by the second domain server.

Bruce Schneier: "Kerberos" In: "Applied cryptography : protocols, algorithms and source code in C", 31 December 1996 (1996-12-31 ), JOHN WILEY & SONS, New York [u.a.] 021893, XP055650304, discloses Kerberos algorithm where a Ticket-Granting Ticket generated by "Kerberos" is authenticated by "TGS" and Server Ticket generated by "TGS" is authenticated by "Server".

### SUMMARY

Embodiments of the present invention provide a token generation and authentication method and an authentication server. Data transmission resources and storage resources in an authentication server cluster can be reduced when a token is correctly authenticated.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, an embodiment of the present invention provides a token generation and authentication method, where the method includes:
verifying, by a first authentication server, a login request of a user; and
when the first authentication server successfully verifies the login request of the user, establishing, by the first authentication server, a session for the user and generating a token including identification information and token addressing information for the user, where the identification information is used to identify the session of the user, the token addressing information is used to indicate a storage location of the token in an authentication server cluster, and the first authentication server is located in the authentication server cluster.

With reference to the first aspect, in a first possible implementation of the first aspect, the generating, by the first authentication server, a token for the user includes:
determining, by the first authentication server, the identification information;
generating, by the first authentication server, the token addressing information according to an address and a service port of the first authentication server; and
encapsulating, by the first authentication server, the token addressing information outside the identification information.

With reference to the first possible implementation of the first aspect, in a second possible implementation of the first aspect, the token further includes security verification information, and the generating, by the first authentication server, a token for the user further includes:
encapsulating, by the first authentication server, the security verification information outside the token addressing information and the identification information.

With reference to the first aspect and/or the first possible implementation of the first aspect and/or the second possible implementation of the first aspect, in a third possible implementation of the first aspect, the method further includes:
receiving, by the first authentication server, a token authentication request, where the token authentication request includes the token; and obtaining the token addressing information from the token carried in the token authentication request; and
when the first authentication server determines that the storage location indicated by the obtained token addressing information is the first authentication server, obtaining, by the first authentication server, the identification information from the token carried in the token authentication request, and performing, according to the obtained identification information, authentication on the token carried in the token authentication request.

With reference to the third possible implementation of the first aspect, in a fourth possible implementation of the first aspect, that the first authentication server determines that the storage location indicated by the obtained token addressing information is the first authentication server includes:
determining, by the first authentication server, that an address and a service port in the obtained token addressing information are the address and the service port of the first authentication server.

With reference to the fourth possible implementation of the first aspect, in a fifth possible implementation of the first aspect, the token carried in the token authentication request further includes the security verification information, and before the obtaining, by the first authentication server, the token addressing information from the token carried in the token authentication request, the method further includes:
obtaining, by the first authentication server, the security verification information from the token carried in the token authentication request, and performing, according to the obtained security verification information, security verification on the token carried in the token authentication request.

With reference to the fifth possible implementation of the first aspect, in a sixth possible implementation of the first aspect, the obtained security verification information is an SHA algorithm private key, and the performing, by the first authentication server according to the obtained security verification information, security verification on the token carried in the token authentication request includes:
performing, by the first authentication server, the security verification on the SHA algorithm private key by using an SHA algorithm public key.

With reference to the third possible implementation of the first aspect and/or the fourth possible implementation of the first aspect and/or the fifth possible implementation of the first aspect and/or the sixth possible implementation of the first aspect, in a seventh possible implementation of the first aspect, the performing, by the first authentication server according to the obtained identification information, authentication on the token carried in the token authentication request includes:
searching, by the first authentication server, locally stored sessions to determine whether a session identified by the identification information exists, and generating an authentication result according to a searching result.

According to a second aspect, an embodiment of the present invention provides a token generation and authentication method. The token includes identification information and token addressing information, the identification information is used to identify a session of a user, the token addressing information is used to indicate a storage location of the token in an authentication server cluster, and the method includes:
receiving, by a second authentication server, a token authentication request, where the token authentication request includes the token; and obtaining the token addressing information from the token; and
when the second authentication server determines that the storage location indicated by the token addressing information is not located in the second authentication server, forwarding, by the second authentication server, the token to a first authentication server in which the storage location indicated by the token addressing information is located, so that the first authentication server performs authentication on the token, where both the first authentication server and the second authentication server are located in the authentication server cluster.

With reference to the second aspect, in a first possible implementation of the second aspect, the method further includes:
receiving, by the second authentication server, an authentication result sent by the first authentication server, where the authentication result is obtained by the first authentication server by performing the authentication on the token.

According to a third aspect, an embodiment of the present invention provides an authentication server, including:
a verification unit, configured to verify a login request of a user;
an establishment unit, configured to establish a session for the user when the verification unit successfully verifies the login request of the user; and
a generation unit, configured to generate a token for the user when the verification unit successfully verifies the login request of the user, where the token includes identification information and token addressing information, the identification information is used to identify the session of the user, the token addressing information is used to indicate a storage location of the token in an authentication server cluster, and the authentication server is located in the authentication server cluster.

With reference to the third aspect, in a first possible implementation of the third aspect, the generation unit includes:
a determining subunit, configured to determine the identification information;
a generation subunit, configured to generate the token addressing information according to an address and a service port of the authentication server; and
an encapsulation subunit, configured to encapsulate the token addressing information outside the identification information.

With reference to the first possible implementation of the third aspect, in a second possible implementation of the third aspect, the token further includes security verification information, and the encapsulation subunit is further configured to:
encapsulate the security verification information outside the token addressing information and the verification information.

With reference to the third aspect and/or the first possible implementation of the third aspect and/or the second possible implementation of the third aspect, in a third possible implementation of the third aspect, the authentication server further includes:
a receiving unit, configured to receive a token authentication request, where the token authentication request includes the token;
a processing unit, configured to obtain the token addressing information from the token carried in the token authentication request received by the receiving unit, and when determining that the storage location indicated by the obtained token addressing information is the authentication server, obtain the identification information from the token carried in the token authentication request; and
an authentication unit, configured to perform, according to the identification information obtained by the processing unit, authentication on the token carried in the token authentication request.

With reference to the third possible implementation of the third aspect, in a fourth possible implementation of the third aspect, the processing unit is specifically configured to:
determine that an address and a service port in the obtained token addressing information are the address and the service port of the authentication server.

In the embodiments of the present invention, a first authentication server verifies a login request of a user, and when the verification on the login request of the user succeeds, establishes a session for the user and generates a token for the user. The token includes identification information and token addressing information, where the identification information is used to identify the session of the user, and the token addressing information is used to indicate a storage location of the token in an authentication server cluster. The first authentication server is located in the authentication server cluster. First, the token generated by the first authentication server includes the identification information, so as to ensure that the authentication server cluster can correctly perform authentication on the token. Secondly, because the token carries the token addressing information, even if an authentication server determined by a load balancing server is not an authentication server that stores the token, the authentication server can forward, according to the token addressing information, the token to the authentication server that stores the token for token authentication. In this way, authentication servers do not need to replicate sessions of each other, thereby reducing data transmission resources and storage resources in the authentication server cluster.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an example diagram of a single sign-on process of a user in the prior art;
FIG. 2 is a diagram of a network structure supporting single sign-on in the prior art;
FIG. 3 is an example diagram of a network structure used in a token authentication method according to an embodiment of the present invention;
FIG. 4 is a schematic flowchart of a token generation and authentication method according to an embodiment of the present invention;
FIG. 5A is a schematic structural diagram of a token according to an embodiment of the present invention;
FIG. 5B is another schematic structural diagram of a token according to an embodiment of the present invention;
FIG. 5C is a schematic diagram of a token generation and decapsulation process according to an embodiment of the present invention;
FIG. 6 is another schematic flowchart of a token generation and authentication method according to an embodiment of the present invention;
FIG. 7A is an example diagram of a network structure of a token generation and authentication method according to an embodiment of the present invention;
FIG. 7B is another schematic flowchart of a token generation and authentication method according to an embodiment of the present invention;
FIG. 7C is an example diagram of a token authentication process according to an embodiment of the present invention;
FIG. 8A is another schematic flowchart of a token generation and authentication method according to an embodiment of the present invention;
FIG. 8B is another example diagram of a token authentication process according to an embodiment of the present invention;
FIG. 9 is a schematic structural diagram of a first authentication server according to an embodiment of the present invention;
FIG. 10 is a schematic structural diagram of a second authentication server according to an embodiment of the present invention; and
FIG. 11 is a schematic structural diagram of an authentication server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

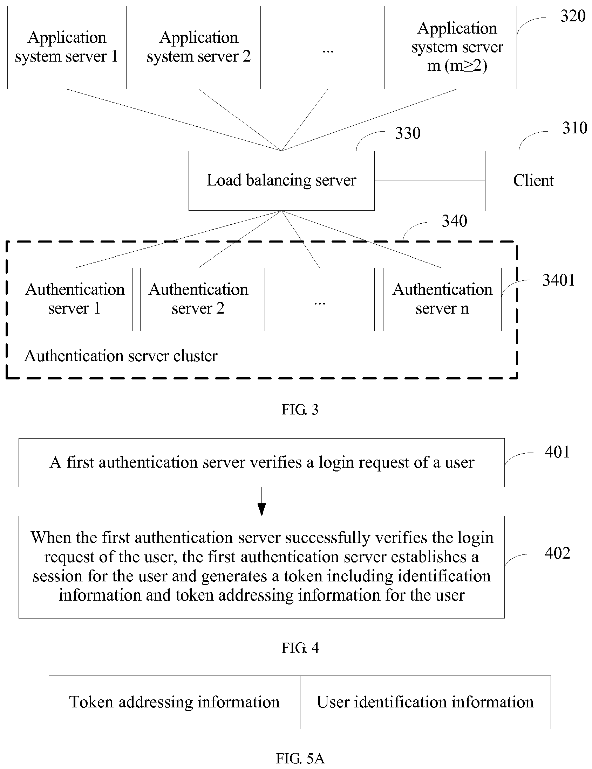

Referring to FIG. 3, a network architecture used in a token authentication method according to an embodiment of the present invention includes a client 310, m application system servers 320 (m≥2), a load balancing server 330, an authentication server cluster 340 that includes n authentication servers 3401 (n≥2). The load balancing server 330 is separately connected to the client 310, the application system servers 320, and the authentication servers 3401. The client 310 is used for user login and access to each application system. The application system server 320 is configured to provide a user with various services of a corresponding application system. The load balancing server 330 is configured to distribute a login request sent by the client and token authentication requests sent by the application system servers to the authentication servers 3401 for processing, and feed back processing results of the authentication servers 3401 to the corresponding client 310 or application system servers 320. The authentication server 3401 is configured to process the login request or the token authentication request, and feed back the processing result to the load balancing server 330.

With reference to the network architecture, the following describes implementation of a token authentication method, apparatus, and server in the embodiments of the present invention.

Referring to FIG. 4, FIG. 4 is a schematic flowchart of a token generation and authentication method according to an embodiment of the present invention, and the method includes the following steps.

Step 401: A first authentication server verifies a login request of a user.

The first authentication server may be any server in an authentication server cluster, and is referred to as the first authentication server only for distinguishing from a second authentication server that is described later. The first and the second have no practical meanings.

Step 402: When the first authentication server successfully verifies the login request of the user, the first authentication server establishes a session for the user and generates a token including identification information and token addressing information for the user.

The first authentication server is located in the authentication server cluster.

The following describes the token in this embodiment of the present invention.

For distinguishing from the token in this embodiment of the present invention, a token in the prior art is referred to as a conventional token below. The conventional token generally includes identification information. The identification information may be implemented by user information, session information, or random code, and is used to uniquely identify a session established by an authentication server for a user after the user successfully logs in. The authentication server may search the authentication server for the session of the user according to the conventional token and further determine whether the user successfully logs in and whether the conventional token is correct.

The token in this embodiment of the present invention may include identification information and token addressing information. The identification information is used to identify the session established by the authentication server for the user, and the token addressing information is used to indicate a storage location of the token in the authentication server cluster.

The identification information may be implemented by the conventional token, and in this case, this embodiment of the present invention may be compatible with the prior art. The identification information may be specifically implemented by user information, session information, or random code, and is used to uniquely identify a session established by the authentication server for the user after the user successfully logs in.

The token addressing information may include an address and an authentication service port of the authentication server that generates the token. The address of the authentication server may be an internal IP address of the authentication server in the authentication server cluster, a MAC address of the authentication server, or the like, provided that the authentication server can be uniquely identified. The authentication service port is used to record a port on which the authentication server provides a service.

Optionally, to improve token security in a transfer process, the token may further include security verification information. The security verification information is used to perform security verification on the token. In a possible implementation, the security verification information may be a key of an encryption algorithm, such as a secure hash algorithm (SHA, Secure Hash Algorithm) private key.

In a first possible implementation, referring to FIG. 5A, the token may be obtained by adding the token addressing information to the conventional token.

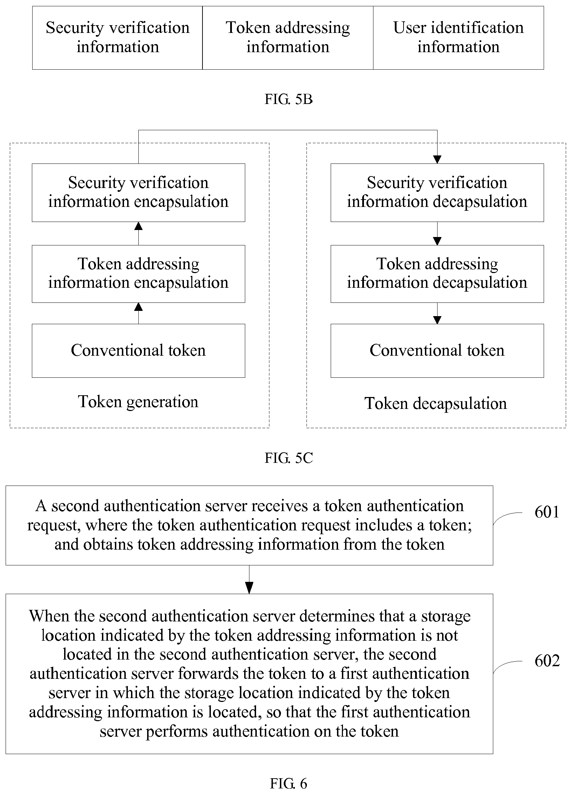

In a second possible implementation, referring to FIG. 5B, the token may be obtained by adding the token addressing information and the security verification information to the conventional token.

In a possible implementation, the token may be generated in a layer-by-layer encapsulation manner. When the token includes the identification information and the token addressing information, the token addressing information may be encapsulated outside the identification information; or when the token includes the identification information, the token addressing information, and the security verification information, the token addressing information and the security verification information may be encapsulated layer by layer outside the identification information. For example, referring to FIG. 5C, for a token structure shown in FIG. 5B, the conventional token may be generated first, the token addressing information may be encapsulated subsequently, and the security verification information may be encapsulated finally; and correspondingly, for a token requiring authentication, the authentication server first decapsulates the security verification information, and after the verification succeeds, decapsulates the token addressing information, and finally decapsulates the conventional token.

When the token includes the identification information and the token addressing information, the generating, by the first authentication server, a token for the user may include:
determining, by the first authentication server, the identification information;
generating, by the first authentication server, the token addressing information according to an address and a service port of the first authentication server; and
encapsulating, by the first authentication server, the token addressing information outside the identification information.

When the token includes the identification information, the token addressing information, and the security verification information, the generating, by the first authentication server, a token for the user may include:
determining, by the first authentication server, the identification information;
generating, by the first authentication server, the token addressing information according to an address and a service port of the first authentication server;
encapsulating, by the first authentication server, the token addressing information outside the identification information; and
encapsulating, by the first authentication server, the security verification information outside the token addressing information and the verification information.

After step 402, the method may further include:
receiving, by the first authentication server, a token authentication request, where the token authentication request includes the token; and obtaining the token addressing information from the token carried in the token authentication request; and
when the first authentication server determines that the storage location indicated by the obtained token addressing information is the first authentication server, obtaining, by the first authentication server, the identification information from the token carried in the token authentication request, and performing, according to the obtained identification information, authentication on the token carried in the token authentication request.

That the first authentication server determines that the storage location indicated by the obtained token addressing information is the first authentication server may include:
determining, by the first authentication server, that an address and a service port in the obtained token addressing information are the address and the service port of the first authentication server.

The token carried in the token authentication request may further include the security verification information. Before the obtaining, by the first authentication server, the token addressing information from the token carried in the token authentication request, the method may further include:
obtaining, by the first authentication server, the security verification information from the token carried in the token authentication request, and performing, according to the obtained security verification information, security verification on the token carried in the token authentication request.

The obtained security verification information may be an SHA algorithm private key. The performing, by the first authentication server according to the obtained security verification information, security verification on the token carried in the token authentication request may include:
performing, by the first authentication server, the security verification on the SHA algorithm private key by using an SHA algorithm public key.

The performing, by the first authentication server according to the obtained identification information, authentication on the token carried in the token authentication request may include:
searching, by the first authentication server, locally stored sessions to determine whether a session identified by the identification information exists, and generating an authentication result according to a searching result.

In this embodiment of the present invention, a first authentication server verifies a login request of a user, and when the verification on the login request of the user succeeds, establishes a session for the user and generates a token for the user. The token includes identification information and token addressing information. The identification information is used to identify the session of the user, and the token addressing information is used to indicate a storage location of the token in an authentication server cluster. The first authentication server is located in the authentication server cluster. First, the token generated by the first authentication server includes the identification information, so as to ensure that the authentication server cluster can correctly perform authentication on the token. Secondly, because the token carries the token addressing information, even if an authentication server determined by a load balancing server is not an authentication server that stores the token, the authentication server can forward, according to the token addressing information, the token to the authentication server that stores the token for token authentication. In this way, authentication servers do not need to replicate sessions of each other, thereby reducing data transmission resources and storage resources in the authentication server cluster.

Referring to FIG. 6, FIG. 6 is another schematic flowchart of a token generation and authentication method according to an embodiment of the present invention, and the method includes the following steps.

Step 601: A second authentication server receives a token authentication request, where the token authentication request includes a token; and obtains token addressing information from the token, where the second authentication server is located in an authentication server cluster.

Step 602: When the second authentication server determines that a storage location indicated by the token addressing information is not located in the second authentication server, the second authentication server forwards the token to a first authentication server in which the storage location indicated by the token addressing information is located, so that the first authentication server performs authentication on the token.

After step 602, the method may further include:
receiving, by the second authentication server, an authentication result sent by the first authentication server, where the authentication result is obtained by the first authentication server by performing the authentication on the token.

In this embodiment, a second authentication server obtains token addressing information from a token requiring authentication, and when determining that a storage location indicated by the token addressing information is not located in the second authentication server, forwards the token to a first authentication server in which the storage location indicated by the token addressing information is located, so that the first authentication server performs authentication on the token, to ensure that an authentication server cluster can correctly perform authentication on the token. In addition, because the token carries the token addressing information, even if the second authentication server determined by a load balancing server is not an authentication server that stores the token, the second authentication server may also forward, according to the token addressing information, the token to the first authentication server that stores the token for token authentication. Therefore, authentication servers do not need to replicate sessions of each other, thereby reducing data transmission resources and storage resources in the authentication server cluster.

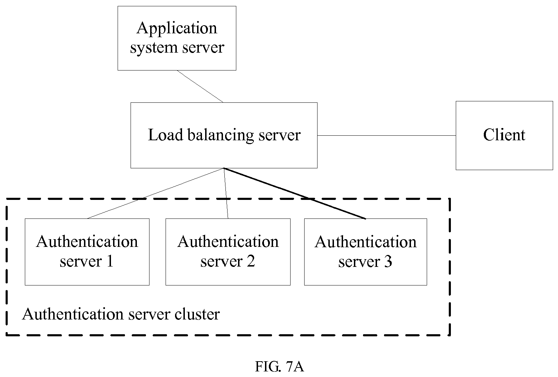

Referring to FIG. 7A, FIG. 7A is an example of a network architecture according to an embodiment of the present invention. The network architecture includes a client, an application system server, a load balancing server, and an authentication server cluster, and the authentication server cluster includes an authentication server 1, an authentication server 2, and an authentication server 3. It is assumed that the authentication server 1 is a first authentication server generating a token for a user of the client.

With reference to FIG. 7A, a token generation and authentication method in an embodiment of the present invention is described.

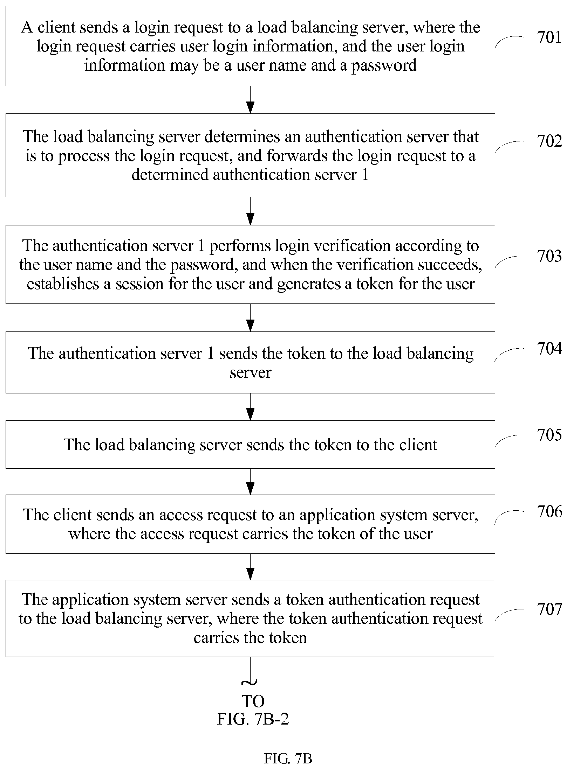

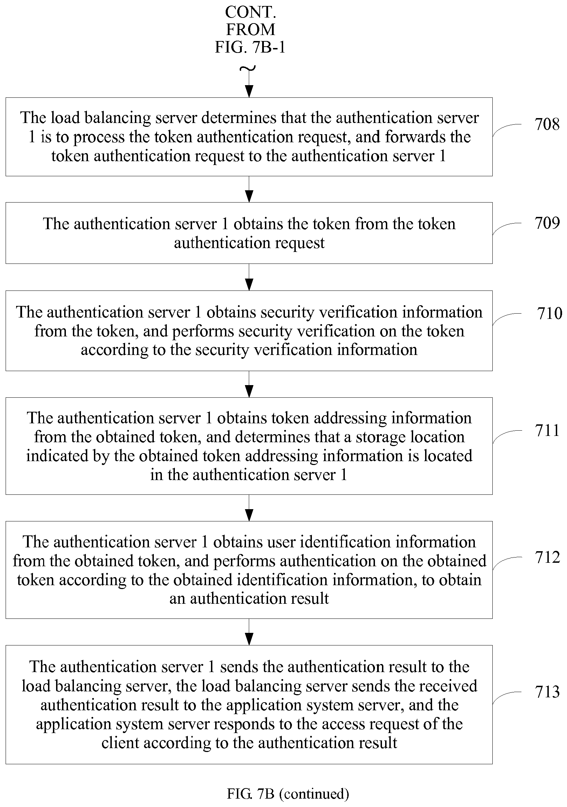

Referring to FIG. 7B, FIG. 7B is another schematic flowchart of the token generation and authentication method in this embodiment of the present invention. In this embodiment, it is assumed that a server for token authentication determined by a load balancing server is a first authentication server. The method includes the following steps.

The following step 701 to step 705 are a process in which a user logs in to a client and obtains a token.

Step 701: The client sends a login request to the load balancing server, where the login request carries user login information, and the user login information may be a user name and a password.

For example, it is assumed that the user that uses the client is a user A, and the login request may carry a user name and a password of the user A.

Step 702: The load balancing server determines an authentication server 1 that is to process the login request, and forwards the login request to the authentication server 1.

The authentication server 1 may be an authentication server in an authentication server cluster.

The load balancing server may perform a hash operation according to an IP address and the like of the client that sends the login request, to determine an authentication server that is to process a token authentication request.

Step 703: The authentication server 1 performs login verification according to the user name and the password, and when the verification succeeds, establishes a session for the user and generates a token for the user, where the token includes identification information, token addressing information, and security verification information.

This embodiment of the present invention concerns only a processing process in which the authentication server generates the token for the user after the login verification succeeds, and constitutes no limitation on a processing process in which the login verification fails, and details are not described.

The token addressing information may include an address and an authentication service port of the authentication server 1.

For a method for generating the token addressing information by the authentication server 1, refer to related description in step 402, and details are not repeatedly described herein.

In this step, the identification information in the token is generally stored in the session established by the authentication server 1 for the user. When the identification information is implemented by using a conventional token, the conventional token is stored in the session established by the authentication server 1 for the user. It should be noted that, there may be one or more pieces identification information, and the user can use any piece for authentication. The authentication server 1 in this embodiment of the present invention may only locally store the session established for the user instead of synchronizing the session to another authentication server.

For example, Table 3 lists examples of sessions stored in the authentication server 1, an authentication server 2, and an authentication server 3. For example, the authentication server 1 in Table 3 establishes a session for the user A, and stores conventional tokens A01 and A02 generated for the user A. In this embodiment, two conventional tokens A01 and A02 generated by the authentication server 1 for the user A are used as an example, and either of A01 and A02 may be used in a use process.

**Table 3**

| **Authentication server 1** | **Authentication server 2** | **Authentication server 3** |
|---|---|---|
| User A, conventional token (A01 andA02) | User C, conventional token (C56 and C89) | User F, conventional token (F87 and F25) |
| User E, conventional token (E06 and E08) | User D, conventional token ... | User H, conventional token ... |
| User G, conventional token ... | | |

Step 704: The authentication server 1 sends the token to the load balancing server.

Step 705: The load balancing server sends the token to the client.

The following step 706 to step 713 are a token authentication process.

Step 706: The client sends an access request to an application system server, where the access request carries the token of the user.

Step 707: The application system server sends a token authentication request to the load balancing server, where the token authentication request carries the token.

Step 708: The load balancing server determines that the authentication server 1 is to process the token authentication request, and forwards the token authentication request to the authentication server 1.

The load balancing server may perform a hash operation according to an IP address and the like of the application system server that sends the token authentication request, to determine the authentication server 1 that is to process the token authentication request.

Step 709: The authentication server 1 obtains the token from the token authentication request.

Step 710: The authentication server 1 obtains the security verification information from the obtained token, performs security verification on the obtained token according to the obtained security verification information, and when the verification succeeds, performs step 711.

When the verification fails, the authentication server 1 may send a verification failure message to the load balancing server, and the load balancing server forwards the verification failure message to the client, and details are not described herein.

For example, it is assumed that the security verification information is an SHA algorithm private key, and in this step, the authentication server 1 may use an SHA algorithm public key to verify the token.

Step 711: The authentication server 1 obtains the token addressing information from the obtained token, determines whether a storage location indicated by the obtained token addressing information is the authentication server 1, and performs step 712 if the storage location indicated by the obtained token addressing information is the authentication server 1.

Because in step 709, the token authentication request carries the token generated by the authentication server 1 for the user, a determining result in this step is definitely that the storage location indicated by the obtained token addressing information is the authentication server 1, and a branch with the determining result being no is not described.

Step 712: The authentication server 1 obtains the identification information from the obtained token, performs authentication on the obtained token according to the obtained identification information, and performs step 713 after obtaining an authentication result.

The performing, by the authentication server 1 according to the obtained identification information, authentication on the token may include:
searching, by the authentication server 1, locally stored sessions to determine whether a session identified by the identification information exists, and generating the authentication result according to a searching result.

Specifically, if a session identified by the identification information exists in the locally stored sessions, the authentication server 1 obtains user information of the found session and generates an authentication success message including the user information; or if no session identified by the identification information exists, the authentication server 1 generates an authentication failure message.

Step 713: The authentication server 1 sends the authentication result to the load balancing server, the load balancing server sends the received authentication result to the application system server, and the application system server responds to the access request of the client according to the authentication result, and the processing process ends.

If the authentication result is an authentication success message, the application system server obtains the user information and allows the user to access an application system. If the authentication result is an authentication failure message, the application system server does not allow the user to access an application system.

The token authentication process in step 706 to step 713 is described by using an example.

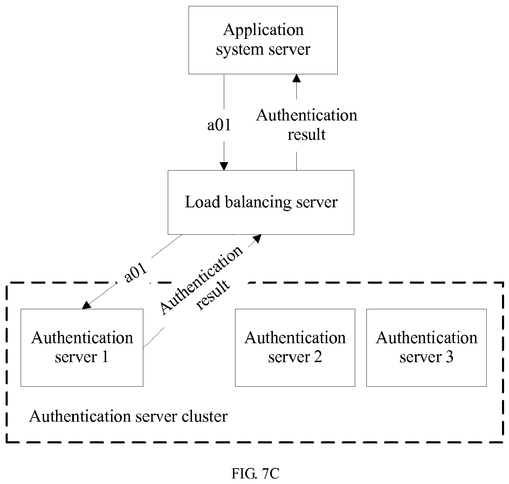

It is assumed that sessions stored in the authentication server 1 are listed in Table 3. The application system server needs to verify a token a01 in which the conventional token A01 is encapsulated, and then perform steps 706 to 713. Referring to FIG. 7C, the authentication server 1 directly performs authentication on the token a01 sent by the load balancing server, and feeds back an authentication result to the application system server by using the load balancing server.

In this embodiment, an authentication server 1 is not only a server that generates a token, but also a server that authenticates the token and that is determined by a load balancing server. It may be determined according to token addressing information in the token that, a storage location indicated by the token addressing information is the authentication server 1. The authentication server 1 performs authentication on the token. Because the authentication server 1 generates the token, the authentication server 1 can correctly perform the authentication on the token.

In addition, authentication servers only need to store sessions respectively established by the authentication servers themselves, and do not need to replicate sessions established by other authentication servers. Therefore, compared with the prior art, in this embodiment, data transmission resources and storage resources in the authentication server cluster are reduced. Further, an authentication system may determine a scale of the authentication server cluster according to a system capacity and a user scale and dynamically add a new authentication server node, with no need to consider a capacity limit of a single authentication server and overheads of mutual session replication between the authentication servers.

In addition, the load balancing server in this embodiment of the present invention can still select, according to an existing processing method, an authentication server that is to process the login request and the token authentication request, so as to be compatible with the prior art.

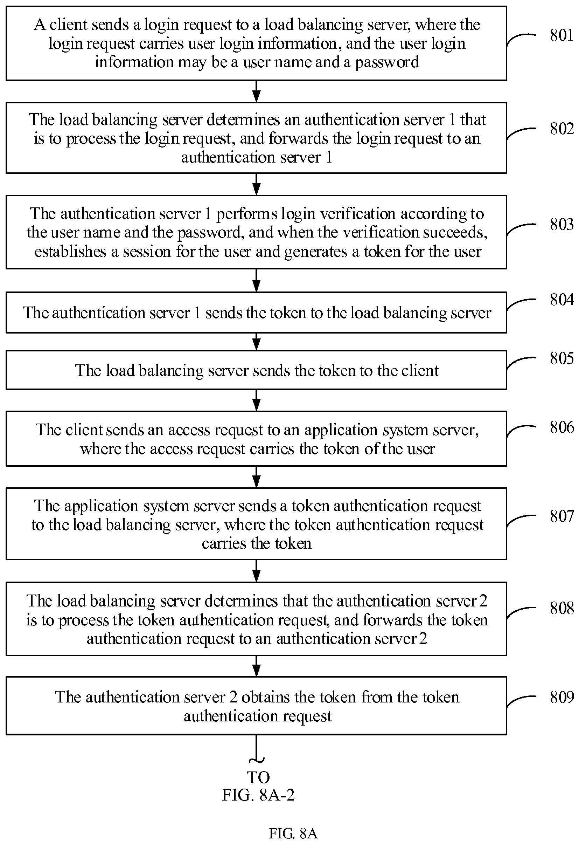

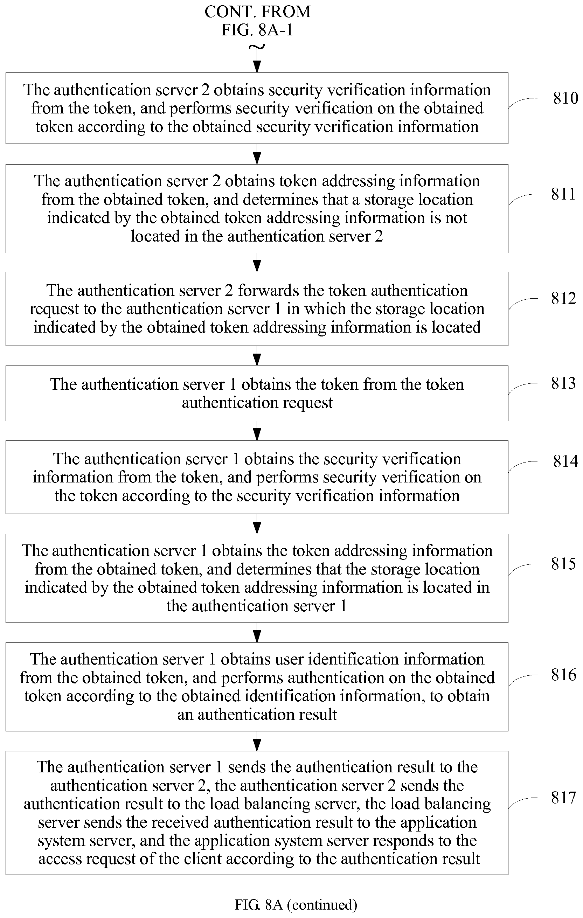

Referring to FIG. 8A, FIG. 8A is another schematic flowchart of a token generation and authentication method according to an embodiment of the present invention. In this embodiment, it is assumed that an authentication server 1 is a first authentication server that generates a token for a user of a client, and an authentication server 2 is a second authentication server for token authentication determined by a load balancing server. The method includes the following steps.

For step 801 to step 807, refer to step 701 to step 707, and details are not repeatedly described herein.

Step 808: The load balancing server distributes the token authentication request to the authentication server 2.

Step 809: The authentication server 2 obtains the token from the token authentication request.

Step 810: The authentication server 2 obtains the security verification information from the obtained token, performs security verification on the obtained token according to the obtained security verification information, and perform step 811 when the verification succeeds.

When the verification fails, the authentication server 2 may send a verification failure message to the load balancing server, and the load balancing server forwards the verification failure message to the client, and details are not described herein.

Step 811: The authentication server 2 obtains the token addressing information from the obtained token, determines whether a storage location indicated by the obtained token addressing information is the authentication server 2, and performs step 812 if the storage location indicated by the obtained token addressing information is not the authentication server 2.

Because in step 809, the token authentication request carries the token generated by the authentication server 1 for the user, a determining result in this step is definitely that the storage location indicated by the obtained token addressing information is not the authentication server 2, and a branch with the determining result being yes is not described.

Step 812: The authentication server 2 forwards the token authentication request to the authentication server 1 indicated by the obtained token addressing information.

For step 813 to step 816, refer to step 709 to step 712, and details are not repeatedly described herein.

Step 817: The authentication server 1 sends the authentication result to the authentication server 2, the authentication server 2 sends the authentication result to the load balancing server, the load balancing server sends the received authentication result to the application system server, and the application system server responds to the access request of the client according to the authentication result, and the processing process ends.

The following describes a token authentication process in this embodiment of the present invention by using an example.

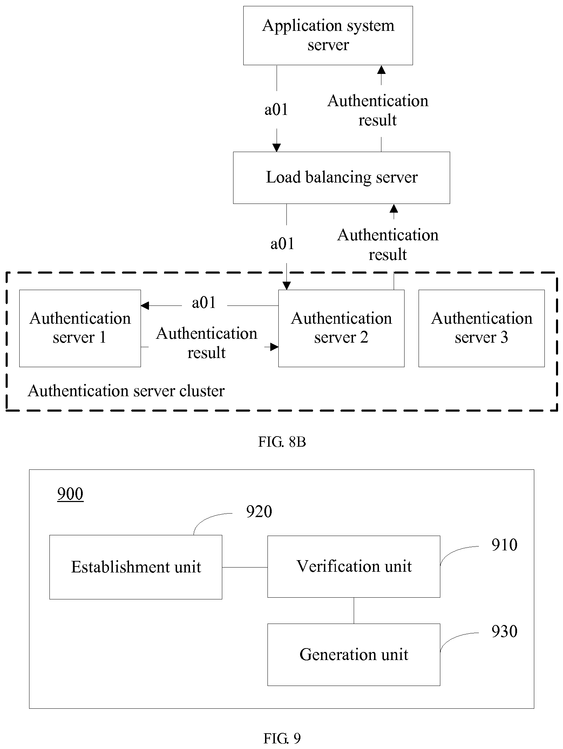

It is assumed that sessions stored in the authentication servers are listed in Table 3. The application system server needs to verify a token a01 obtained after a conventional token A01 is encapsulated, and then perform step 806 to step 817. Referring to FIG. 8B, the authentication server 2 forwards the token a01 to the authentication server 1 for authentication, the authentication server 1 feeds back an authentication result to the authentication server 2, and the authentication server 2 feeds back the authentication result to the application system server by using the load balancing server.

In this embodiment, for a same user, when an authentication server 2 that authenticates a token of the user is not an authentication server that generates the token, the authentication server 2 is used as a forwarding node to forward a token authentication request to an authentication server 1 indicated by token addressing information, and the authentication server 1 performs authentication processing on the token, thereby ensuring that an authentication system can correctly perform authentication on the token.

In addition, authentication servers only need to store sessions respectively established by the authentication servers themselves, and do not need to replicate sessions established by other authentication servers. Therefore, compared with the prior art, in this embodiment, data transmission resources and storage resources in the authentication server cluster are reduced. Further, an authentication system may determine a scale of the authentication server cluster according to a system capacity and a user scale and dynamically add a new authentication server node, with no need to consider a capacity limit of a single authentication server and overheads of mutual session replication between the authentication servers.

In addition, the load balancing server in this embodiment of the present invention can still select, according to an existing processing method, an authentication server that is to process the login request and the token authentication request, so as to be compatible with the prior art.

Corresponding to the foregoing methods, an embodiment of the present invention further provides an authentication server.

Referring to FIG. 9, an authentication server 900 includes a verification unit 910, an establishment unit 920, and a generation unit 930.

The verification unit 910 is configured to verify a login request of a user.

The establishment unit 920 is configured to establish a session for the user when the verification unit 910 successfully verifies the login request of the user.

The generation unit 930 is configured to generate a token including identification information and token addressing information for the user when the verification unit 910 successfully verifies the login request of the user. The identification information is used to identify the session of the user. The token addressing information is used to indicate a storage location of the token in an authentication server cluster. The authentication server is located in the authentication server cluster.

Optionally, the generation unit 930 may include:
a determining subunit, configured to determine the identification information;
a generation subunit, configured to generate the token addressing information according to an address and a service port of the authentication server; and
an encapsulation subunit, configured to encapsulate the token addressing information outside the identification information.

Optionally, the token may further include security verification information. The encapsulation subunit may be further configured to:
encapsulate the security verification information outside the token addressing information and the verification information.

Optionally, the authentication server 900 may further include:
a receiving unit, configured to receive a token authentication request, where the token authentication request includes the token;
a processing unit, configured to obtain the token addressing information from the token carried in the token authentication request received by the receiving unit, and when determining that the storage location indicated by the obtained token addressing information is the authentication server, obtain the identification information from the token carried in the token authentication request; and
an authentication unit, configured to perform, according to the identification information obtained by the processing unit, authentication on the token carried in the token authentication request.

Optionally, the processing unit may be specifically configured to:
determine that an address and a service port in the obtained token addressing information are the address and the service port of the authentication server.

Optionally, the token carried in the token authentication request may further include the security verification information. The processing unit may further be configured to:
obtain the security verification information from the token carried in the token authentication request, and perform, according to the obtained security verification information, security verification on the token carried in the token authentication request.

Optionally, the obtained security verification information may be an SHA algorithm private key. That the processing unit is configured to perform, according to the obtained security verification information, security verification on the token carried in the token authentication request may specifically include:
performing the security verification on the SHA algorithm private key by using an SHA algorithm public key.

Optionally, the authentication unit may be specifically configured to:
search locally stored sessions to determine whether a session identified by the identification information exists, and generate an authentication result according to a searching result.

In this embodiment, the authentication server verifies a login request of a user, and when the verification on the login request of the user succeeds, establishes a session for the user and generates a token for the user. The token includes identification information and token addressing information. The identification information is used to identify the session of the user, and the token addressing information is used to indicate a storage location of the token in an authentication server cluster. The authentication server is located in the authentication server cluster. First, the token generated by the authentication server includes the identification information, so as to ensure that the authentication server cluster can correctly perform authentication on the token. Secondly, because the token carries the token addressing information, even if an authentication server determined by a load balancing server is not an authentication server that stores the token, the authentication server can forward, according to the token addressing information, the token to the authentication server that stores the token for token authentication. In this way, authentication servers do not need to replicate sessions of each other, thereby reducing data transmission resources and storage resources in the authentication server cluster.

Corresponding to the foregoing methods, an embodiment of the present invention further provides an authentication server.

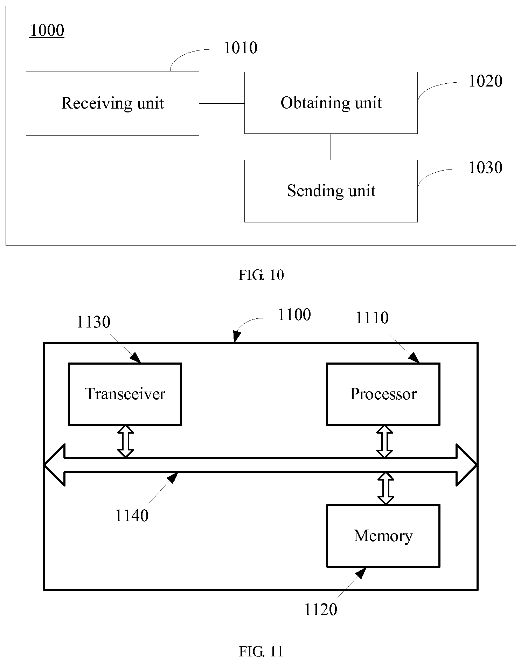

Referring to FIG. 10, an authentication server 1000 includes a receiving unit 1010, an obtaining unit 1020, and a sending unit 1030.

The receiving unit 1010 is configured to receive a token authentication request. The token authentication request includes a token.

The obtaining unit 1020 is configured to obtain token addressing information from the token received by the receiving unit 1010.

The sending unit 1030 is configured to: when a storage location indicated by the token addressing information obtained by the obtaining unit 1020 is not the authentication server, forward, according to the storage location, the token to another authentication server located in a same cluster as the authentication server, so that the another authentication server performs authentication on the token.

Optionally, the receiving unit 1010 may be further configured to:
receive an authentication result sent by the authentication server in which the storage location is located, where the authentication result is obtained by the authentication server in which the storage location is located by performing the authentication on the token.

In this embodiment, the authentication server obtains token addressing information from a token requiring authentication, and when determining that a storage location indicated by the token addressing information is not located in the authentication server, forwards the token to an authentication server in which the storage location indicated by the token addressing information is located, and the authentication server in which the storage location is located performs authentication on the token, so as to ensure that an authentication server cluster can correctly perform authentication on the token. In addition, because the token carries the token addressing information, even if an authentication server determined by a load balancing server is not an authentication server that stores the token, the authentication server determined by the load balancing server can also forward, according to the token addressing information, the token to the authentication server that stores the token for token authentication. In this way, authentication servers do not need to replicate sessions of each other, thereby reducing data transmission resources and storage resources in the authentication server cluster.

Referring to FIG. 11, FIG. 11 is a schematic structural diagram of an authentication server according to an embodiment of the present invention. The authentication server 1100 includes a processor 1110, a memory 1120, a transceiver 1130, and a bus 1140.

The processor 1110, the memory 1120, and the transceiver 1130 are connected to each other by using the bus 1140, and the bus 1140 may be an ISA bus, a PCI bus, an EISA bus, or the like. The bus may be classified into an address bus, a data bus, a control bus, and the like. For ease of indication, the bus is represented by using only one thick line in FIG. 11; however, it does not indicate that there is only one bus or only one type of bus.

The memory 1120 is configured to store a program. Specifically, the program may include program code. The program code includes a computer operation instruction. The memory 1120 may include a high-speed RAM memory, and may further include a non-volatile memory (non-volatile memory), such as at least one magnetic disk storage.

The transceiver 1130 is configured to connect to another device and communicate with the another device.

The processor 1110 is configured to execute the program code.

When the authentication server is used as a first authentication server in this embodiment of the present invention, the processor 1110 is configured to verify a login request of a user, and when the verification on the login request of the user succeeds, establish a session for the user and generate a token including identification information and token addressing information for the user. The identification information is used to identify the session of the user. The token addressing information is used to indicate a storage location of the token in an authentication server cluster. The first authentication server is located in the authentication server cluster. Specifically, the processor 1110 may be configured to implement functions of some or all of units in the verification unit, the establishment unit, the generation unit, the processing unit, and the authentication unit in the embodiment shown in FIG. 9, and the transceiver 1130 is configured to implement a function of the receiving unit in the embodiment shown in FIG. 9.

When the authentication server is used as a second authentication server in this embodiment of the present invention, the transceiver 1130 is configured to receive a token authentication request. The token authentication request includes a token.

The processor 1110 is configured to obtain token addressing information from the token.

The transceiver 1130 is further configured to: when the processor 1110 determines that a storage location indicated by the token addressing information is not the second authentication server, forward, according to the storage location, the token to another authentication server located in a same cluster as the authentication server, so that a first authentication server performs authentication on the token. Both the first authentication server and the second authentication server are located in the authentication server cluster.

Specifically, the processor 1110 may be configured to implement a function of the obtaining unit in the embodiment shown in FIG. 10, and the transceiver 1130 may be configured to implement functions of the receiving unit and the sending unit in the embodiment shown in FIG. 10.

In this embodiment of the present invention, a token generated by the authentication server includes identification information, so as to ensure that an authentication server cluster can correctly perform authentication on the token. In addition, because the token carries token addressing information, even if an authentication server determined by a load balancing server is not an authentication server that stores the token, the authentication server can forward, according to the token addressing information, the token to the authentication server that stores the token for token authentication. In this way, authentication servers do not need to replicate sessions of each other, thereby reducing data transmission resources and storage resources in the authentication server cluster.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementations of the present invention, but are not intended to limit the protection scope of the present invention, which is confined to the scope of the appending claims.

## Claims

1. A token generation and authentication method, wherein the method comprises:
verifying (401), by a first authentication server (900), a login request of a user, wherein the login request is sent by a client (310) and distributed by a load balancing server (330) to the first authentication server (900), and wherein the load balancing server (330) is connected to the client (310), the first authentication server (900) and a second authentication server (1000);
when the first authentication server (900) successfully verifies the login request of the user, establishing (402), by the first authentication server (900), a session for the user and generating a token comprising identification information and token addressing information for the user, wherein the identification information is used to identify the session of the user, the token addressing information comprises an address and an authentication service port of the first authentication server (900), which generates the token; and
sending, by the first authentication server (900), the token via the load balancing server (330) to the client (310), so that the client (310) is enabled to send the token and the second authentication server (1000) is enabled to receive the token from the client (310) via the load balancing server (330) and to forward the token to the first authentication server (900) for performing authentication, according to the token addressing information;
wherein the method further comprises:
receiving (601), by the second authentication server (1000), the token that is sent by the client (310) and that is forwarded by the load balancing server (330);
obtaining, by the second authentication server (1000), the token addressing information from the token; and
determining, by the second authentication server (1000), that the storage location indicated by the token addressing information is not the second authentication server (1000) but the first authentication server (900) instead;
forwarding (602), by the second authentication server (1000), the token to the first authentication server (900);
receiving, by the second authentication server (1000), an authentication result sent by the first authentication server (900), wherein the authentication result is obtained by the first authentication server (900) by performing authentication on the token.

2. The method according to claim 1, wherein the generating, by the first authentication server (900), a token for the user comprises:
determining, by the first authentication server (900), the identification information;
generating, by the first authentication server (900), the token addressing information according to an address and an authentication service port of the first authentication server (900); and
encapsulating, by the first authentication server (900), the token addressing information outside the identification information.

3. The method according to claim 2, wherein the token further comprises security verification information, and the generating, by the first authentication server (900), a token for the user further comprises:
encapsulating, by the first authentication server (900), the security verification information outside the token addressing information and the identification information.

4. The method according to any one of claims 1 to 3, further comprising:
receiving, by the first authentication server (900), a token authentication request, wherein the token authentication request comprises the token; obtaining, by the first authentication server (900), the token addressing information from the token carried in the token authentication request; and
determining, by the first authentication server (900), that the storage location indicated by the obtained token addressing information is the first authentication server (900);
obtaining, by the first authentication server (900), the identification information from the token carried in the token authentication request, and
performing, by the first authentication server (900), according to the obtained identification information, authentication on the token carried in the token authentication request.

5. The method according to claim 4, wherein that the first authentication server (900) determines that the storage location indicated by the obtained token addressing information is the first authentication server (900) comprises:
determining, by the first authentication server (900), that an address and an authentication service port in the obtained token addressing information are the address and the authentication service port of the first authentication server (900).

6. The method according to claim 5, wherein the token carried in the token authentication request further comprises the security verification information, and before the obtaining, by the first authentication server (900), the token addressing information from the token carried in the token authentication request, the method further comprises:
obtaining, by the first authentication server (900), the security verification information from the token carried in the token authentication request, and performing, by the first authentication server (900), according to the obtained security verification information, security verification on the token carried in the token authentication request.

7. The method according to claim 6, wherein the obtained security verification information is an SHA algorithm private key, and the performing, by the first authentication server (900) according to the obtained security verification information, security verification on the token carried in the token authentication request comprises:
performing, by the first authentication server (900), the security verification on the SHA algorithm private key by using an SHA algorithm public key.

8. A token generation and authentication system comprising an authentication server cluster, wherein the authentication server cluster comprises a first authentication server (900) and a second authentication server (1000);
wherein the first authentication server (900), comprises:
a verification unit (910), configured to verify a login request of a user, wherein the login request is sent by a client (310) and distributed by a load balancing server (330) to the first authentication server (900), and wherein the load balancing server (330) is connected to the client (310), the first authentication server (900) and the second authentication server (1000);
an establishment unit (920), configured to establish a session for the user when the verification unit successfully verifies the login request of the user; and
a generation unit (930), configured to generate a token comprising identification information and token addressing information for the user when the verification unit successfully verifies the login request, wherein the identification information is used to identify the session of the user, the token addressing information comprises an address and an authentication service port of the first authentication server (900), which generates the token,
and the generation unit (930) is further configured to send the token via the load balancing server (330) to the client (310), so that the client (310) is enabled to send the token and the second authentication server (1000) is enabled to receive the token from the client (310) via the load balancing server (330) and to forward the token to the first authentication server (900) for performing authentication, according to the token addressing information; and
wherein the second authentication server (1000) comprises:
a receiving unit, configured to receive the token that is sent by the client (310) and that is forwarded by the load balancing server (330);
an obtaining unit, configured to obtain the token addressing information from the token; and
a sending unit, configured to: determine that the storage location indicated by the token addressing information is not the second authentication server (1000) but the first authentication server (900) instead, and forward the token to the first authentication server (900);
wherein the receiving unit is further configured to: receive an authentication result sent by the first authentication server (900), wherein the authentication result is obtained by the first authentication server (900) by performing authentication on the token.

9. The system according to claim 8, wherein the generation unit comprises:
a determining subunit, configured to determine the identification information;
a generation subunit, configured to generate the token addressing information according to an address and an authentication service port of the first authentication server (900); and
an encapsulation subunit, configured to encapsulate the token addressing information outside the identification information.

10. The system according to claim 9, wherein the token further comprises security verification information, and the encapsulation subunit is further configured to:
encapsulate the security verification information outside the token addressing information and the verification information.

11. The system according to any one of claims 8 to 10, further comprising:
a receiving unit, configured to receive a token authentication request, wherein the token authentication request comprises the token;
a processing unit, configured to obtain the token addressing information from the token carried in the token authentication request received by the receiving unit, determines that the storage location indicated by the obtained token addressing information is the first authentication server (900), and obtain the identification information from the token carried in the token authentication request; and
an authentication unit, configured to perform, according to the identification information obtained by the processing unit, authentication on the token carried in the token authentication request.

12. The system according to claim 11, wherein the processing unit is specifically configured to:
determine that an address and an authentication service port in the obtained token addressing information are the address and the authentication service port of the first authentication server (900).

## Patentansprüche

1. Token-Erzeugungs- und -Authentifikationsverfahren, wobei das Verfahren Folgendes umfasst:
Verifizieren (401) durch einen ersten Authentifikations-Server (900) einer Anmeldeanforderung eines Anwenders, wobei die Anmeldeanforderung durch einen Client (310) gesendet wird und durch einen Lastausgleichs-Server (330) zu dem ersten Authentifikations-Server (900) verteilt wird und wobei der Lastausgleichs-Server (330) mit dem Client (310), dem ersten Authentifikations-Server (900) und einem zweiten Authentifikations-Server (1000) verbunden ist,
wenn der erste Authentifikations-Server (900) die Anmeldeanforderung des Anwenders erfolgreich verifiziert, Aufbauen (402) durch den ersten Authentifikations-Server (900) einer Sitzung für den Anwender und Erzeugen eines Tokens, das Identifikationsinformationen und Token-Adressierungsinformationen für den Anwender umfasst, wobei die Identifikationsinformationen verwendet werden, um die Sitzung des Anwenders zu identifizieren, die Token-Adressierungsinformationen eine Adresse und einen Authentifikations-Dienstanschluss des ersten Authentifikations-Servers (900), der das Token erzeugt, umfassen, und
Senden durch den ersten Authentifikations-Server (900) gemäß den Token-Adressierungsinformationen des Tokens über den Lastausgleichs-Server (330) an den Client (310), so dass der Client (310) freigegeben ist, um das Token zu senden, und der zweite Authentifikations-Server (1000) freigegeben ist, um das Token über den Lastausgleichs-Server (330) von dem Client (310) zu empfangen und das Token zum Ausführen der Authentifikation zu dem ersten Authentifikations-Server (900) weiterzuleiten;
wobei das Verfahren ferner Folgendes umfasst:
Empfangen (601) durch den zweiten Authentifikations-Server (1000) des Tokens, das durch den Client (310) gesendet wird und das durch den Lastausgleichs-Server (330) weitergeleitet wird,
Erhalten durch den zweiten Authentifikations-Server (1000) der Token-Adressierungsinformationen aus dem Token; und
Bestimmen durch den zweiten Authentifikations-Server (1000), dass der durch die Token-Adressierungsinformationen angegebene Speicherort nicht der zweite Authentifikations-Server (1000), sondern stattdessen der erste Authentifikations-Server (900) ist,
Weiterleiten (602) durch den zweiten Authentifikations-Server (1000) des Tokens zu dem ersten Authentifikations-Server (900);
Empfangen durch den zweiten Authentifikations-Server (1000) eines durch den ersten Authentifikations-Server (900) gesendeten Authentifikationsergebnisses, wobei das Authentifikationsergebnis durch den ersten Authentifikations-Server (900) durch Ausführen einer Authentifikation an dem Token erhalten wird.

2. Verfahren nach Anspruch 1, wobei das Erzeugen durch den ersten Authentifikations-Server (900) eines Tokens für den Anwender Folgendes umfasst:
Bestimmen durch den ersten Authentifikations-Server (900) der Identifikationsinformationen;
Erzeugen durch den ersten Authentifikations-Server (900) der Token-Adressierungsinformationen gemäß einer Adresse und einem Authentifikations-Dienstanschluss des ersten Authentifikations-Servers (900); und
Einkapseln durch den ersten Authentifikations-Server (900) der Token-Adressierungsinformationen außerhalb der Identifikationsinformationen.

3. Verfahren nach Anspruch 2, wobei das Token ferner Sicherheitsverifikationsinformationen umfasst und das Erzeugen durch den ersten Authentifikations-Server (900) eines Tokens für den Anwender ferner Folgendes umfasst:
Einkapseln durch den ersten Authentifikations-Server (900) der Sicherheitsverifikationsinformationen außerhalb der Token-Adressierungsinformationen und der Identifikationsinformationen.

4. Verfahren nach einem der Ansprüche 1 bis 3, das ferner Folgendes umfasst:
Empfangen durch den ersten Authentifikations-Server (900) einer Token-Authentifikationsanforderung, wobei die Token-Authentifikationsanforderung das Token umfasst, Erhalten durch den ersten Authentifikations-Server (900) der Token-Adressierungsinformationen aus dem in der Token-Authentifikationsanforderung übertragenen Token; und
Bestimmen durch den ersten Authentifikations-Server (900), dass der durch die erhaltenen Token-Adressierungsinformationen angegebene Speicherort der erste Authentifikations-Server (900) ist;
Erhalten durch den ersten Authentifikations-Server (900) der Identifikationsinformationen aus dem in der Token-Authentifikationsanforderung übertragenen Token; und
Ausführen durch den ersten Authentifikations-Server (900) der Authentifikation an dem in der Token-Authentifikationsanforderung übertragenen Token gemäß den erhaltenen Identifikationsinformationen.

5. Verfahren nach Anspruch 4, wobei, dass der erste Authentifikations-Server (900) bestimmt, dass der durch die erhaltenen Token-Adressierungsinformationen angegebene Speicherort der erste Authentifikations-Server (900) ist, Folgendes umfasst:
Bestimmen durch den ersten Authentifikations-Server (900), dass eine Adresse und ein Authentifikations-Dienstanschluss in den erhaltenen Token-Adressierungsinformationen die Adresse und der Authentifikations-Dienstanschluss des ersten Authentifikations-Servers (900) sind.

6. Verfahren nach Anspruch 5, wobei das in der Token-Authentifikationsanforderung übertragene Token ferner die Sicherheitsverifikationsinformationen umfasst und vor dem Erhalten durch den ersten Authentifikations-Server (900) der Token-Adressierungsinformationen aus dem in der Token-Authentifikationsanforderung übertragenen Token das Verfahren ferner Folgendes umfasst:
Erhalten durch den ersten Authentifikations-Server (900) der Sicherheitsverifikationsinformationen aus dem in der Token-Authentifikationsanforderung übertragenen Token und Ausführen durch den ersten Authentifikations-Server (900) einer Sicherheitsverifikation an dem in der Token-Authentifikationsanforderung übertragenen Token gemäß den erhaltenen Sicherheitsverifikationsinformationen.

7. Verfahren nach Anspruch 6, wobei die erhaltenen Sicherheitsverifikationsinformationen ein geheimer Schlüssel eines SHA-Algorithmus sind und das Ausführen durch den ersten Authentifikations-Server (900) gemäß den erhaltenen Sicherheitsverifikationsinformationen der Sicherheitsverifikation an dem in der Token-Authentifikationsanforderung übertragenen Token Folgendes umfasst:
Ausführen durch den ersten Authentifikations-Server (900) der Sicherheitsverifikation an dem geheimen Schlüssel des SHA-Algorithmus unter Verwendung eines öffentlichen Schlüssels des SHA-Algorithmus.

8. Token-Erzeugungs- und -Authentifikationssystem, das einen Authentifikations-Server-Cluster umfasst, wobei der Authentifikations-Server-Cluster einen ersten Authentifikations-Server (900) und einen zweiten Authentifikations-Server (1000) umfasst,
wobei der erste Authentifikations-Server (900) Folgendes umfasst:
eine Verifikationseinheit (910), die konfiguriert ist, eine Anmeldeanforderung eines Anwenders zu verifizieren, wobei die Anmeldeanforderung durch einen Client (310) gesendet wird und durch einen Lastausgleichs-Server (330) zu dem ersten Authentifikations-Server (900) verteilt wird, und wobei der Lastausgleichs-Server (330) mit dem Client (310), dem ersten Authentifikations-Server (900) und einem zweiten Authentifikations-Server (1000) verbunden ist,
eine Aufbaueinheit (920), die konfiguriert ist, eine Sitzung für den Anwender aufzubauen, wenn die Verifikationseinheit die Anmeldeanforderung des Anwenders erfolgreich verifiziert, und
eine Erzeugungseinheit (930), die konfiguriert ist, ein Token, das Identifikationsinformationen und Token-Adressierungsinformationen für den Anwender umfasst, zu erzeugen, wenn die Verifikationseinheit die Anmeldeanforderung erfolgreich verifiziert, wobei die Identifikationsinformationen verwendet werden, um die Sitzung des Anwenders zu identifizieren, die Token-Adressierungsinformationen eine Adresse und einen Authentifikations-Dienstanschluss des ersten Authentifikations-Servers (900), der das Token erzeugt, umfassen,
und wobei die Erzeugungseinheit (930) ferner konfiguriert ist, gemäß den Token-Adressierungsinformationen das Token über den Lastausgleichs-Server (330) an den Client (310) zu senden, so dass der Client (310) freigegeben ist, um das Token zu senden, und der zweite Authentifikations-Server (1000) freigegeben ist, um das Token über den Lastausgleichs-Server (330) von dem Client (310) zu empfangen und das Token zum Ausführen der Authentifikation zu dem ersten Authentifikations-Server (900) weiterzuleiten; und
wobei der zweite Authentifikations-Server (1000) Folgendes umfasst:
eine Empfangseinheit, die konfiguriert ist, das Token, das durch den Client (310) gesendet wird und das durch den Lastausgleichs-Server (330) weitergeleitet wird, zu empfangen,
eine Erhalteeinheit, die konfiguriert ist, die Token-Adressierungsinformationen aus dem Token zu erhalten, und
eine Sendeeinheit, die konfiguriert ist: zu bestimmen, dass der durch die Token-Adressierungsinformationen angegebene Speicherort nicht der zweite Authentifikations-Server (1000), sondern stattdessen der erste Authentifikations-Server (900) ist, und das Token zu dem ersten Authentifikations-Server (900) weiterzuleiten;
wobei die Empfangseinheit ferner konfiguriert ist: ein durch den ersten Authentifikations-Server (900) gesendetes Authentifikationsergebnis zu empfangen, wobei das Authentifikationsergebnis durch den ersten Authentifikations-Server (900) durch Ausführen einer Authentifikation an dem Token erhalten wird.

9. System nach Anspruch 8, wobei die Erzeugungseinheit Folgendes umfasst:
eine Bestimmungs-Untereinheit, die konfiguriert ist, die Identifikationsinformationen zu bestimmen,
eine Erzeugungs-Untereinheit, die konfiguriert ist, die Token-Adressierungsinformationen gemäß einer Adresse und einem Authentifikations-Dienstanschluss des ersten Authentifikations-Servers (900) zu erzeugen, und
eine Einkapselungs-Untereinheit, die konfiguriert ist, die Token-Adressierungsinformationen außerhalb der Identifikationsinformationen einzukapseln.

10. System nach Anspruch 9, wobei das Token ferner Sicherheitsverifikationsinformationen umfasst und die Einkapselungs-Untereinheit ferner konfiguriert ist:
die Sicherheitsverifikationsinformationen außerhalb der Token-Adressierungsinformationen und der Verifikationsinformationen einzukapseln.

11. System nach einem der Ansprüche 8 bis 10, das ferner Folgendes umfasst:
eine Empfangseinheit, die konfiguriert ist, eine Token-Authentifikationsanforderung zu empfangen, wobei die Token-Authentifikationsanforderung das Token umfasst,
eine Verarbeitungseinheit, die konfiguriert ist, die Token-Adressierungsinformationen aus dem in der durch die Empfangseinheit empfangenen Token-Authentifikationsanforderung übertragenen Token zu erhalten, bestimmt, dass der durch die erhaltenen Token-Adressierungsinformationen angegebene Speicherort der erste Authentifikations-Server (900) ist und erhält die Identifikationsinformationen aus dem in der Token-Authentifikationsanforderung übertragenen Token; und
eine Authentifikationseinheit, die konfiguriert ist, die Authentifikation an dem in der Token-Authentifikationsanforderung übertragenen Token gemäß den durch die Verarbeitungseinheit erhaltenen Identifikationsinformationen auszuführen.

12. System nach Anspruch 11, wobei die Verarbeitungseinheit spezifisch konfiguriert ist:
zu bestimmen, dass eine Adresse und ein Authentifikations-Dienstanschluss in den erhaltenen Token-Adressierungsinformationen die Adresse und der Authentifikations-Dienstanschluss des ersten Authentifikations-Servers (900) sind.

## Revendications

1. Procédé de génération et d'authentification de jeton, le procédé comprenant :
la vérification (401), par un premier serveur d'authentification (900), d'une demande de connexion d'un utilisateur, dans lequel la demande de connexion est envoyée par un client (310) et diffusée par un serveur d'équilibrage de charge (330) au premier serveur d'authentification (900), et dans lequel le serveur d'équilibrage de charge (330) est connecté au client (310), au premier serveur d'authentification (900) et à un second serveur d'authentification (1000) ;
lorsque le premier serveur d'authentification (900) vérifie avec succès la demande de connexion de l'utilisateur, l'établissement (402), par le premier serveur d'authentification (900), d'une session pour l'utilisateur et la génération d'un jeton comprenant des informations d'identification et des informations d'adressage de jeton pour l'utilisateur, dans lequel les informations d'identification servent à identifier la session de l'utilisateur, les informations d'adressage de jeton comprennent une adresse et un port de service d'authentification du premier serveur d'authentification (900) qui génère le jeton; et
l'envoi, par le premier serveur d'authentification (900), du jeton via le serveur d'équilibrage de charge (330) au client (310), de telle sorte que le client (310) soit activé pour envoyer le jeton et le second serveur d'authentification (1000) soit activé pour recevoir le jeton à partir du client (310) via le serveur d'équilibrage de charge (330) et transmettre le jeton au premier serveur d'authentification (900) afin de réaliser l'authentification, conformément aux informations d'adressage de jeton ;
le procédé comprenant en outre :
la réception (601), par le second serveur d'authentification (1000), du jeton envoyé par le client (310) et transmis par le serveur d'équilibrage de charge (330) ;
l'obtention, par le second serveur d'authentification (1000), des informations d'adressage de jeton à partir du jeton ; et
la détermination, par le second serveur d'authentification (1000), que l'emplacement de stockage indiqué par les informations d'adressage de jeton n'est pas le second serveur d'authentification (1000) mais le premier serveur d'authentification (900) ;
le transfert (602), par le second serveur d'authentification (1000), du jeton au premier serveur d'authentification (900) ;
la réception, par le second serveur d'authentification (1000), d'un résultat d'authentification envoyé par le premier serveur d'authentification (900), dans lequel le résultat d'authentification est obtenu par le premier serveur d'authentification (900) en réalisant une authentification sur le jeton.

2. Procédé selon la revendication 1, dans lequel la génération, par le premier serveur d'authentification (900), d'un jeton pour l'utilisateur comprend :
la détermination, par le premier serveur d'authentification (900), des informations d'identification;
la génération, par le premier serveur d'authentification (900), des informations d'adressage de jeton en fonction d'une adresse et d'un port de service d'authentification du premier serveur d'authentification (900) ; et
l'encapsulation, par le premier serveur d'authentification (900), des informations d'adressage de jeton en dehors des informations d'identification.

3. Procédé selon la revendication 2, dans lequel le jeton comprend en outre des informations de vérification de sécurité, et la génération, par le premier serveur d'authentification (900), d'un jeton pour l'utilisateur comprend en outre :
l'encapsulation, par le premier serveur d'authentification (900), des informations de vérification de sécurité en dehors des informations d'adressage de jeton et des informations d'identification.

4. Procédé selon l'une quelconque des revendications 1 à 3, comprenant en outre :
la réception, par le premier serveur d'authentification (900), d'une demande d'authentification de jeton, dans lequel la demande d'authentification de jeton comprend le jeton ; l'obtention, par le premier serveur d'authentification (900), des informations d'adressage de jeton à partir du jeton convoyé dans la demande d'authentification de jeton ; et
la détermination, par le premier serveur d'authentification (900), que l'emplacement de stockage indiqué par les informations d'adressage de jeton obtenues est le premier serveur d'authentification (900) ;
l'obtention, par le premier serveur d'authentification (900), des informations d'identification à partir du jeton convoyé dans la demande d'authentification de jeton, et
la réalisation, par le premier serveur d'authentification (900), conformément aux informations d'identification obtenues, d'une authentification sur le jeton convoyé dans la demande d'authentification de jeton.

5. Procédé selon la revendication 4, dans lequel la détermination par le premier serveur d'authentification (900) que l'emplacement de stockage indiqué par les informations d'adressage de jeton obtenues est le premier serveur d'authentification (900) comprend la détermination, par le premier serveur d'authentification (900), qu'une adresse et un port de service d'authentification dans les informations d'adressage de jeton obtenues sont l'adresse et le port de service d'authentification du premier serveur d'authentification (900).

6. Procédé selon la revendication 5, dans lequel le jeton convoyé dans la demande d'authentification de jeton comprend en outre les informations de vérification de sécurité, et avant l'obtention, par le premier serveur d'authentification (900), des informations d'adressage de jeton à partir du jeton convoyé dans la demande d'authentification de jeton, le procédé comprend en outre :
l'obtention, par le premier serveur d'authentification (900), des informations de vérification de sécurité du jeton convoyé dans la demande d'authentification de jeton, et la réalisation, par le premier serveur d'authentification (900), conformément aux informations de vérification de sécurité obtenues, d'une vérification de sécurité sur le jeton convoyé dans la demande d'authentification de jeton.

7. Procédé selon la revendication 6, dans lequel les informations de vérification de sécurité obtenues sont une clé privée de l'algorithme SHA, et la réalisation, par le premier serveur d'authentification (900) conformément aux informations de vérification de sécurité obtenues, d'une vérification de sécurité sur le jeton convoyé dans la demande d'authentification de jeton comprend :
la réalisation, par le premier serveur d'authentification (900), de la vérification de sécurité sur la clé privée de l'algorithme SHA à l'aide d'une clé publique de l'algorithme SHA.

8. Système de génération et d'authentification de jeton comprenant une grappe de serveurs d'authentification, dans lequel la grappe de serveurs d'authentification comprend un premier serveur d'authentification (900) et un second serveur d'authentification (1000) ;
dans lequel le premier serveur d'authentification (900), comprend :
une unité de vérification (910), configurée pour vérifier une demande de connexion d'un utilisateur, dans lequel la demande de connexion est envoyée par un client (310) et distribuée par un serveur d'équilibrage de charge (330) au premier serveur d'authentification (900), et dans lequel le serveur d'équilibrage de charge (330) est connecté au client (310), au premier serveur d'authentification (900) et au second serveur d'authentification (1000) ;
une unité d'établissement (920), configurée pour établir une session pour l'utilisateur lorsque l'unité de vérification vérifie avec succès la demande de connexion de l'utilisateur ; et
une unité de génération (930), configurée pour générer un jeton comprenant des informations d'identification et des informations d'adressage de jeton pour l'utilisateur lorsque l'unité de vérification vérifie avec succès la demande de connexion, dans lequel les informations d'identification servent à identifier la session de l'utilisateur, les informations d'adressage de jeton comprennent une adresse et un port de service d'authentification du premier serveur d'authentification (900) qui génère le jeton,
et l'unité de génération (930) est en outre configurée pour envoyer le jeton via le serveur d'équilibrage de charge (330) au client (310), de telle sorte que le client (310) soit activé pour envoyer le jeton et le second serveur d'authentification (1000) soit activé pour recevoir le jeton à partir du client (310) via le serveur d'équilibrage de charge (330) et transmettre le jeton au premier serveur d'authentification (900) pour réaliser une authentification, conformément aux informations d'adressage de jeton ; et
dans lequel le second serveur d'authentification (1000) comprend :
une unité de réception, configurée pour recevoir le jeton envoyé par le client (310) et transmis par le serveur d'équilibrage de charge (330) ;
une unité d'obtention, configurée pour obtenir les informations d'adressage de jeton à partir du jeton ; et
une unité d'envoi, configurée pour : déterminer que l'emplacement de stockage indiqué par les informations d'adressage de jeton n'est pas le second serveur d'authentification (1000) mais le premier serveur d'authentification (900), et transférer le jeton au premier serveur d'authentification (900) ;
dans lequel l'unité de réception est en outre configurée pour :
recevoir un résultat d'authentification envoyé par le premier serveur d'authentification (900), dans lequel le résultat de l'authentification est obtenu par le premier serveur d'authentification (900) en réalisant une authentification sur le jeton.

9. Système selon la revendication 8, dans lequel l'unité de génération comprend :
une sous-unité de détermination, configurée pour déterminer les informations d'identification ;
une sous-unité de génération, configurée pour générer les informations d'adressage de jeton en fonction d'une adresse et d'un port de service d'authentification du premier serveur d'authentification (900) ; et
une sous-unité d'encapsulation, configurée pour encapsuler les informations d'adressage de jeton en dehors des informations d'identification.

10. Système selon la revendication 9, dans lequel le jeton comprend en outre des informations de vérification de sécurité, et la sous-unité d'encapsulation est configurée en outre pour :
encapsuler les informations de vérification de sécurité en dehors des informations d'adressage de jeton et des informations de vérification.

11. Système selon l'une quelconque des revendications 8 à 10, comprenant en outre :
une unité de réception, configurée pour recevoir une demande d'authentification de jeton, dans lequel la demande d'authentification de jeton comprend le jeton ;
une unité de traitement, configurée pour obtenir les informations d'adressage de jeton à partir du jeton convoyé dans la demande d'authentification de jeton reçue par l'unité de réception, détermine que l'emplacement de stockage indiqué par les informations d'adressage de jeton obtenues est le premier serveur d'authentification (900), et obtenir les informations d'identification du jeton convoyé dans la demande d'authentification de jeton ; et
une unité d'authentification, configurée pour réaliser, en fonction des informations d'identification obtenues par l'unité de traitement, une authentification sur le jeton convoyé dans la demande d'authentification de jeton.

12. Système selon la revendication 11, dans lequel l'unité de traitement est spécifiquement configurée pour :
déterminer qu'une adresse et un port de service d'authentification dans les informations d'adressage de jeton obtenues sont l'adresse et le port de service d'authentification du premier serveur d'authentification (900).
